# DEMANDE DE BREVET EUROPEEN

(11) **EP 0 775 604 A1**
(43) Date de publication de la demande: **28.05.1997**
(21) Numéro de dépôt: 95118625.3
(22) Date de dépôt: 27.11.1995
(51) Int. Cl.: B60H 1/00, G05D 23/20

(54) **Procédé et dispositif de régulation de la climatisation d'un véhicule assurant un confort durable**

(71) Demandeur: VALEO CLIMATISATION, 78321 La Verrière (FR)
(72) Inventeur: Gach, Béatrice, F-78960 Voisins le Bretonneux (FR)
(74) Mandataire: Gamonal, Didier

(57) **Abrégé**

Un organe de temporisation (5) agit sur le circuit de commande (1) qui pilote le dispositif de climatisation de façon à modifier, après un certain temps de fonctionnement, la commande d'un organe de traitement tel qu'un volet de mixage (2-1) ou un pulseur (2-3) dans un sens tel qu'il en résulte un abaissement ou une élévation de la température dans l'habitacle selon que le dispositif fonctionne en chauffage ou en réfrigération. On évite ainsi la sensation de "trop chaud" ou de "trop froid" ressentie par les passagers en cours de fonctionnement.

## Description

L'invention concerne la régulation de la climatisation d'un véhicule, c'est-à-dire la régulation de la température dans l'habitacle du véhicule.

Dans un procédé de régulation de la climatisation couramment utilisé, on fixe une température de consigne pour l'habitacle, on détecte la température réelle dans l'habitacle et le cas échéant d'autres données telles que température extérieure, température d'un fluide circulant dans un radiateur de chauffage, et on met en oeuvre, en fonction des données détectées, des moyens de traitement propres à agir sur la température dans l'habitacle de façon que celle-ci évolue vers, ou se maintienne sensiblement à, la température de consigne.

Il a été fréquemment constaté que la sensation de confort procurée initialement par la climatisation fait place ultérieurement à une impression de "trop chaud" ou de "trop froid", selon que la climatisation se traduit par un apport de chaleur ou de froid dans l'habitacle.

Le but de l'invention est de remédier à cet inconvénient, et de procurer un confort durable par la régulation de la climatisation, sans nécessiter de manipulation de la part des usagers après la mise en route de la climatisation.

L'invention vise notamment un procédé du genre défini en introduction, et prévoit que, après une durée prédéterminée de fonctionnement desdits moyens de traitement, on modifie la commande des moyens de traitement de façon à établir dans l'habitacle une température différente de la température de consigne.

D'autres caractéristiques, complémentaires ou alternatives, de l'invention sont énoncées ci-après :
- Ladite durée prédéterminée est de l'ordre de 30 à 60 minutes.
- L'écart entre ladite température différente et la température de consigne est d'environ 1 à 4 °C.
- La modification de la commande consiste à régler un paramètre particulier de fonctionnement des moyens de traitement, notamment la position d'un volet agissant sur le trajet d'un flux d'air ou la tension d'alimentation d'un pulseur d'air, à une valeur différente de celle qui serait nécessaire, toutes chose égales par ailleurs, pour établir une température dans l'habitacle correspondant à la température de consigne.

L'invention a également pour objet un dispositif pour la mise en oeuvre du procédé tel que défini ci-dessus, comprenant des moyens de traitement propres à agir sur la température dans l'habitacle, des capteurs pour détecter la température dans l'habitacle et le cas échéant les autres données à détecter, des moyens de sélection pour fixer la température de consigne, des moyens de commande reliés aux moyens de sélection, aux capteurs et aux moyens de traitement pour commander ces derniers en fonction de la température de consigne et des données détectées, et des moyens de temporisation reliés aux moyens de commande pour permettre à ceux-ci de modifier la commande des moyens de traitement après une durée prédéterminée de fonctionnement du dispositif.

Le dispositif selon l'invention peut comporter au moins certaines des particularités suivantes :
- Les moyens de sélection permettent de choisir, outre la température de consigne initiale, des paramètres de fonctionnement des moyens de traitement tels que vitesse d'un pulseur d'air, distribution d'air traité en différents endroits de l'habitacle, arrêt automatique ou non d'un compresseur pour éviter le givrage d'un évaporateur.
- Lesdits capteurs sont prévus pour détecter, outre la température dans l'habitacle, au moins une donnée choisie parmi la température d'un évaporateur, la température d'un fluide circulant dans un radiateur de chauffage, la température extérieure, un débit d'air envoyé dans l'habitacle par les moyens de traitement, la vitesse du véhicule et son degré d'exposition au soleil, ledit évaporateur et ledit radiateur de chauffage faisant partie des moyens de traitement.
- Les moyens de commande sont propres à agir sur au moins un paramètre de fonctionnement des moyens de traitement choisi parmi la position d'un volet de mixage définissant les fractions respectives d'un débit d'air à envoyer dans l'habitacle qui sont mises en contact avec une source de chaleur et avec une source de froid, la position d'au moins un volet de distribution définissant la répartition dudit débit d'air entre différents endroits de l'habitacle, la tension d'alimentation d'un pulseur produisant ledit débit d'air et la mise en service ou non d'un compresseur de fluide réfrigérant.
- La modification de la commande consiste à régler l'un desdits paramètres, notamment la position du volet de mixage ou la tension d'alimentation du pulseur, à une valeur différente de celle qui serait nécessaire, toutes chose égales par ailleurs, pour établir une température dans l'habitacle correspondant à la température de consigne.

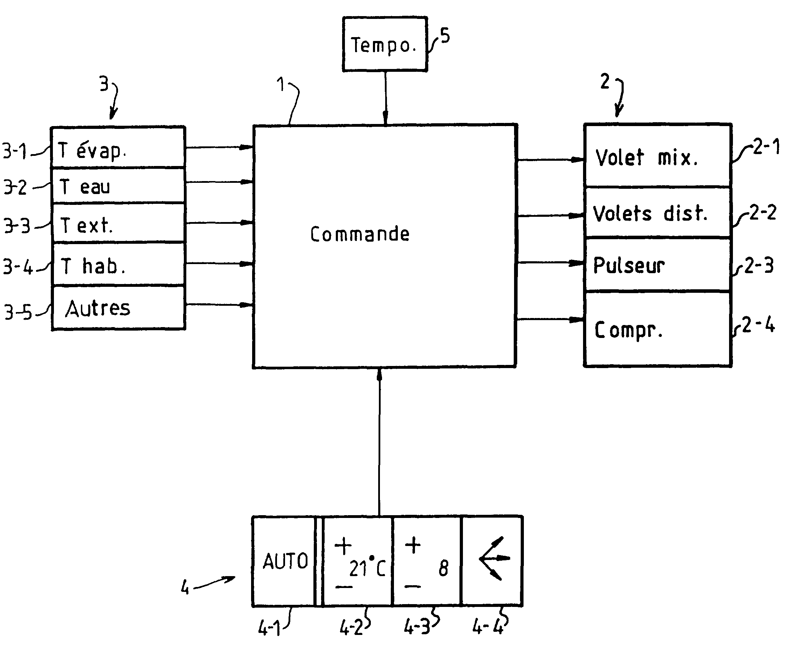

Les caractéristiques et avantages de l'invention seront exposés plus en détail dans la description ci-après, en se référant au dessin annexé, sur lequel la figure unique représente un schéma fonctionnel d'un dispositif de climatisation selon l'invention.

Le dispositif illustré comprend un circuit électronique de commande 1 propre à envoyer des ordres à des moyens de traitement 2 destinés à traiter un flux d'air à envoyer dans l'habitacle d'un véhicule automobile pour régler la température à l'intérieur de celui-ci. Les moyens de traitement 2 comprennent un certain nombre d'organes de traitement dont quelques-uns seulement reçoivent des ordres du circuit 1 et sont indiqués de façon particulière sur la figure. Ces moyens de traitement comprennent notamment un circuit de fluide réfrigérant comportant un compresseur 1-4, un condenseur, un détendeur et un évaporateur, un radiateur de chauffage traversé par un fluide chaud ayant servi par exemple au refroidissement du moteur thermique du véhicule, un pulseur 1-3 entraîné par un moteur électrique de façon à produire un flux d'air qui vient en contact avec l'évaporateur et/ou avec le radiateur, et qui est envoyé ensuite dans l'habitacle, un volet de mixage 1-1 définissant les fractions respectives de ce flux d'air qui viennent en contact avec l'évaporateur et avec le radiateur, et un ou plusieurs volets de distribution 1-2 qui assurent la répartition du flux d'air en différents endroits de l'habitacle, à travers notamment des buses de dégivrage/désembuage du pare-brise, des aérateurs de planche de bord et des bouches de soufflage de pieds. Le circuit de commande 1 commande la tension d'alimentation, et par suite la vitesse de rotation, du pulseur 1-3, la mise en service ou hors service du compresseur 1-4 et, par l'intermédiaire de moyens mécaniques d'actionnement, la position du volet de mixage 1-1 et des volets de distribution 1-2.

Le circuit de commande 1 utilise, pour déterminer les ordres à envoyer aux moyens de traitement 2, des données d'entrée fournies par une série de capteurs 3 et par des organes de sélection 4. Les capteurs 3 comprennent des capteurs de température 3-1 à 3-4 détectant respectivement la température de l'évaporateur, la température du liquide circulant dans le radiateur de chauffage, la température extérieure, c'est-à-dire la température de l'atmosphère entourant le véhicule, et la température à l'intérieur de l'habitacle, qui fait l'objet de la régulation. Des capteurs désignés collectivement par la référence 3-5 peuvent être utilisés pour affiner la régulation, par exemple un capteur détectant la vitesse du véhicule et un capteur détectant le degré d'exposition de celui-ci au soleil.

Les organes de sélection 4 sont placés sur la planche de bord du véhicule et permettent au conducteur d'indiquer la température qu'il souhaite dans l'habitacle, ainsi que d'autres conditions de fonctionnement du dispositif. Ainsi, un sélecteur 4-1 permet de donner ou non au circuit de commande l'ordre d'interrompre automatiquement le fonctionnement du compresseur 1-4 pour éviter le givrage de l'évaporateur. Un sélecteur 4-2 permet de choisir la température de consigne. Un sélecteur 4-3 permet de faire varier la vitesse du pulseur 1-3. Un sélecteur 4-4 permet de choisir entre divers modes de répartition du débit d'air entre les différentes bouches de sortie dans l'habitacle.

Le dispositif tel que décrit jusqu'ici est tout à fait classique. Il n'est donc pas nécessaire d'en donner une description plus détaillée.

A ce dispositif connu s'ajoute, selon l'invention, un organe de temporisation 5 qui a pour fonction d'envoyer un signal au circuit de commande 1 lorsqu'une durée prédéterminée, par exemple 30 minutes, s'est écoulée depuis la mise en route du dispositif. La réception de ce signal entraîne une altération de l'ordre envoyé par le circuit de commande au volet de mixage 2-1 ou au pulseur 2-3, la position du volet ou la vitesse du pulseur étant modifiée de façon à limiter l'action des moyens de traitement dans leur ensemble, produisant ainsi un décalage de la température dans l'habitacle de l'ordre de 1 à 4 °C par rapport à la température de consigne.

Les circuits susceptibles de remplir la fonction de l'organe de temporisation 5 sont bien connus, et l'homme du métier pourra sans difficulté modifier le circuit de commande 1 de façon qu'il soit en mesure de procéder aux changements prévus selon l'invention. Il ne paraît donc pas nécessaire, ici encore, de donner davantage de précisions sur les moyens à mettre en oeuvre.

## Revendications

1. Procédé de régulation de la température dans l'habitacle d'un véhicule, dans lequel on fixe une température de consigne pour l'habitacle, on détecte la température réelle dans l'habitacle et le cas échéant d'autres données telles que température extérieure, température d'un fluide circulant dans un radiateur de chauffage, et on met en oeuvre, en fonction des données détectées, des moyens de traitement propres à agir sur la température dans l'habitacle de façon que celle-ci évolue vers, ou se maintienne sensiblement à, la température de consigne, caractérisé en ce que, après une durée prédéterminée de fonctionnement desdits moyens de traitement, on modifie la commande des moyens de traitement de façon à établir dans l'habitacle une température différente de la température de consigne.

2. Procédé selon la revendication 1, caractérisé en ce que ladite durée prédéterminée est de l'ordre de 30 à 60 minutes.

3. Procédé selon l'une des revendications 1 et 2, caractérisé en ce que l'écart entre ladite température différente et la température de consigne est d'environ 1 à 4 °C.

4. Procédé selon l'une des revendications précédentes, caractérisé en ce que la modification de la commande consiste à régler un paramètre particulier de fonctionnement des moyens de traitement, notamment la position d'un volet agissant sur le trajet d'un flux d'air ou la tension d'alimentation d'un pulseur d'air, à une valeur différente de celle qui serait nécessaire, toutes chose égales par ailleurs, pour établir une température dans l'habitacle correspondant à la température de consigne.

5. Dispositif pour la mise en oeuvre du procédé selon l'une des revendications précédentes, comprenant des moyens de traitement (2) propres à agir sur la température dans l'habitacle, des capteurs (3) pour détecter la température dans l'habitacle et le cas échéant les autres données à détecter, des moyens de sélection (4) pour fixer la température de consigne, des moyens de commande (1) reliés aux moyens de sélection, aux capteurs et aux moyens de traitement pour commander ces derniers en fonction de la température de consigne et des données détectées, et des moyens de temporisation (5) reliés aux moyens de commande pour permettre à ceux-ci de modifier la commande des moyens de traitement après une durée prédéterminée de fonctionnement du dispositif.

6. Dispositif selon la revendication 5, caractérisé en ce que les moyens de sélection (4) permettent de choisir, outre la température de consigne initiale, des paramètres de fonctionnement des moyens de traitement tels que vitesse d'un pulseur d'air, distribution d'air traité en différents endroits de l'habitacle, arrêt automatique ou non d'un compresseur pour éviter le givrage d'un évaporateur.

7. Dispositif selon l'une des revendications 5 et 6, caractérisé en ce que lesdits capteurs (3) sont prévus pour détecter, outre la température dans l'habitacle, au moins une donnée choisie parmi la température d'un évaporateur, la température d'un fluide circulant dans un radiateur de chauffage, la température extérieure, un débit d'air envoyé dans l'habitacle par les moyens de traitement, la vitesse du véhicule et son degré d'exposition au soleil, ledit évaporateur et ledit radiateur de chauffage faisant partie des moyens de traitement.

8. Dispositif selon l'une des revendications 5 à 7, caractérisé en ce que les moyens de commande sont propres à agir sur au moins un paramètre de fonctionnement des moyens de traitement choisi parmi la position d'un volet de mixage (2-1) définissant les fractions respectives d'un débit d'air à envoyer dans l'habitacle qui sont mises en contact avec une source de chaleur et avec une source de froid, la position d'au moins un volet de distribution (2-2) définissant la répartition dudit débit d'air entre différents endroits de l'habitacle, la tension d'alimentation d'un pulseur (2-3) produisant ledit débit d'air et la mise en service ou non d'un compresseur (2-4) de fluide réfrigérant.

9. Dispositif selon la revendication 8, caractérisé en ce que la modification de la commande consiste à régler l'un desdits paramètres, notamment la position du volet de mixage (2-1) ou la tension d'alimentation du pulseur (2-3), à une valeur différente de celle qui serait nécessaire, toutes chose égales par ailleurs, pour établir une température dans l'habitacle.
